# EUROPEAN PATENT SPECIFICATION

(11) **EP 0 741 153 B1**
(45) Date of publication and mention of the grant of the patent: **14.06.2000**
(21) Application number: 96105607.4
(22) Date of filing: 10.04.1996
(51) Int. Cl.: C08G 18/12, C08G 18/10, C08G 18/02, C08G 18/28, C08G 18/08

(54) **Thermoreactive water borne compositions based on stable polyurethane dispersions or solutions**
Thermoreaktive wässrige Zusammensetzungen auf Basis stabiler Polyurethandispersionen oder Lösungen
Compositions thermosensibles aqueuses à base de dispersions ou solutions stables de polyuréthane

(30) Priority: 05.05.1995 IT MI950897
(43) Date of publication of application: 06.11.1996
(73) Proprietor: ENICHEM S.p.A., 20124 Milano (IT)
(72) Inventor: Pozzi, Enrico, Busto Arsizio (VA) (IT); Carraretto, Mario, Mestre (VE) (IT); Lunardon, Gianflavio, Padova (IT)
(74) Representative: Gennari, Marco, Dr.

(56) References cited:
- EP-A- 0 355 682
- EP-A- 0 380 178
- US-A- 5 322 914

## Description

The present invention relates to thermoreactive water-borne compositions based on stable polyurethane dispersions or solutions.

More specifically, the present invention relates to aqueous compositions based on prepolymers terminated with partially or totally blocked NCO groups.

Even more specifically, the present invention relates to systems in an aqueous dispersion or solution based on prepolymers terminated with partially or totally blocked NCO groups and containing hydrophilic groups, the process for their preparation and their use as binders for chipped/granular material, in the form of scraps too, or as adhesives, coatings and thermoreactive films.

The recycling of scraps materials is known in the art, for example grinded polyurethane foam, rubber flakes, chip boards, cork or other lignocellulosic material, and also the use of binders without solvents based on NCO-terminated prepolymers to produce composites mainly in the form of boards, sheets, panels, etc. These binders are developed as an alternative to the known urea/formaldehyde resins, whose use is destined to decline owing to the fact that free formaldehyde causes problems of an environmental hygenic nature.

The technology for the preparation of composites based on recycled waste materials, described for example in U.S. patent 4.025.579, involves agglomerating the granular material with binders without solvents based on prepolymers terminated with NCO groups and subjecting this to the action of heat under pressure in suitable moulds (thermocompression). In this phase the NCO groups react with the humidity present in the material or are reacted with water added during the preliminary impregnation phase or with vapour during the subsequent thermocompression phase. As these binders also rapidly react with the humidity of the air in the enviroment, the agglomerate must be thermocompressed immediately after the impregnation phase.

The use of emulsifiable modified monomeric or polymeric MDI (diphenylmethane diisocyanate), is also known in the same field, and in particular in the recycling of lignocellulosic chips, as described in published European patent applications 335.342, 354.516 and 13.112. These emulsions have a limited pot life (4-30 hours), are suitable for productions without interruption and also require the agglomerate to be thermocompressed immediately after the impregnation phase. Both of the binders described above release monomeric diisocyanates under heat and produce, after cross-linking, mainly polyureic bonds.

Finally, the use of reactive compositions based on dispersions of blocked polyisocyanates and co-reactive compositions containing active hydrogens, is known in the field of paints which are thermocrosslinkable with water, as described in U.S. patents 4.098.933, 4.507.413 and 4.835.210. U.S. patent 5.157.074, moreover, describes aqueous compositions which can be used as coatings or binders containing polyisocyanates with an isocyanic functionality of more than 12% by weight and trimerization catalysts and wherein at least 2% in equivalents of the functional isocyanic groups must be blocked. These compositions are described as being capable of providing high density cross-linking systems to be mainly used as binders for glass fibres, where dispersion, application and cross-linking are preferably performed in a continuous way.

The text of U.S. patent 5.157.074 mentions the fact that the limit of the isocyanic functionality of about 12% by weight is critical for obtaining stable dispersions, especially if the reduction in the isocyanic functionality is obtained by the reaction of polyisocyanates with polyols to form NCO-terminated prepolymers.

In EP-A-355682 a water-dispersible polymer, used as binder in an aqueous filler composition which may or may not comprise, in addition to other polymeric binders, crosslinking agents and the customary additives, is described.

This water-dispersible polymer is a polyurethane resin which contains building blocks derived from: (A) polyisocianates, (B) polyols having an average molecular weight of at least 400, (C) low-molecular polyols if desired and, (D) compounds containing at least two groups reactive toward isocyanate groups and at least one group capable of forming anions, and (E) compounds which are monofunctional or contain active-hydrogen of variable reactivity, these building blocks being always positioned at the chain end of the polyurethane resin, and optionally (F) compounds which are other than (B), (C), (D) and (E) and contain at least two groups reactive toward NCO groups.

The Applicant has now found that monocomponent reactive compositions can be prepared, in the form of aqueous solutions or dispersions which are storage stable, starting from prepolymers with an isocyanic functionality of less than 12% by weight and that these compositions containing trimerization catalysts, after cross-linking under heat, produce elastomeric systems with surprising properties of mechanical resistance.

The present invention therefore relates to thermoreactive aqueous compositions based on stable polyurethane dispersions or solutions comprising:
a) at least one prepolymer containing hydrophilic groups, terminated with a totally or partially blocked isocyanic functionality, with a content of NCO groups of less than 12% by weight and in which the NCO free groups vary from 0 to 6% by weight with respect to the weight of the prepolymer; and
b) at least one trimerization catalyst.

The compounds of step (a) are obtained by the reaction of a polyisocyanate with a compound containing active terminal hydrogen atoms and with monofunctional blocking agents.

Any polyisocyanate capable of giving NCO-terminated prepolymers can be used in the preparation of the compositions of the present invention, such as aliphatic, aromatic, arylaliphatic, cycloaliphatic polyisocyanates containing from 2 to 15 carbon atoms.

In particular low molecular weight polyisocyanates can be used, with a functionality equal to or higher than 2, for example between 2 and 4, possibly modified with urethane groups, carbodiimides, urethidinedione, urethone imine, isocyanurate, urea and biuret, etc. Examples of low molecular weight polyisocyanates are: 1,6-hexamethylenediisocyanate; 1,12-dodecanediisocyanate; meta and/or para-phenylenediisocyanate; 2,4-toluenediisocyanate alone or mixed with the isomer 2,6-toluenediisocyanate; 4,4'-diphenylmethandiisocyanate; possibly mixed with its 2,4' isomer; naphthalenediisocyanate; 2,4'-and/or 4,4'-dicyclohexylmethandiisocyanate; 1-isocyanate-3-isocyanatemethyl-3,3,5-trimethylcyclohexane or isophoronediisocyanate; 1,3- and/or 1,4-xylylene diisocyanate; para or meta tetramethylxylenediisocyanate; etc. Other examples of low molecular weight polyisocyanates are indicated in the published European patent application 324.370.

Alternatively medium or high molecular weight polyisocyanates can be used at varying degrees of condensation such as those obtained by the phosgenation of aniline-formaldehyde condensates. Examples are mixtures of polymethylenepolyphenylenepolyisocyanates having an average functionality of 2.6-2.9. These products are produced under various trade-names, for example "Tedimon 31" or "Tedimon 390" of ENICHEM.

The preferred polyisocyanate of the present invention is however 2,4-toluenediisocyanate alone or mixed with at least 20% by weight of 2,6 isomer.

The preferred compound containing terminal active hydrogen atoms of the present invention comprises:
1) polyols, possibly mixed with polyamines, with a functionality of at least 2;
2) polyols and/or polyamines and/or monols containing hydrophilic groups of the anionic or cationic type and/or of the non-ionic type, to make the prepolymer hydrosoluble or hydrodispersible;
3) optionally chain-extending agents.

The polyols (1) have a molecular weight of between 62 and 10,000 and a nominal functionality of at least 2, preferably between 2 and 4. These compounds can be selected from polyol polyethers; polyol polyesters; mixed polyols containing ether and ester groups; polyether polyols containing terminal or in-chain aminic groups; polyols based on polylactone, polycarbonate, polyacrylate, polybutadiene; their mixtures; etc.

Preferred products are polyol polyethers, also containing ester groups or terminal or in-chain aminic groups, obtained by the condensation of C₂-C₆ olefin oxides on compounds (starters) having at least two active hydrogen atoms. Preferred C₂-C₆ olefin oxides are ethylene oxide; propylene oxide; their mixtures containing ethylene oxide in a quantity of less than 95% by weight, preferably between 1 and 50%; butylene oxide; styrene oxide; tetrahydrofuran; epichlorohydrin; their mixtures; etc.

The condensation takes place on starter such as glycols, triols, tetrols, etc. amines, alkanolamines and polyamines or their mixtures.

Representative examples of polyol polyethers to be used according to the present invention are those terminated with propylene oxide or ethylene oxide and in which the starter is a glycol such as ethyleneglycol; 1,4-butandiol; 1,6-hexandiol; 1,8-octandiol; neopentyl glycol; diethyleneglycol; 1,3-propyleneglycol; dipropyleneglycol; a triol such as glycerine; trimethylolpropane; 1,2,4-trihydroxybutane; 1,2,6-trihydroxyhexane; 1,1,1-trimethylolethane; a tetrol such as pentaerythritol; or a polyfunctional hydroxyalkane such as xylitol; arabitol; sorbitol; mannitol; a diamine such as ethylenediamine; tetramethylene diamine; phenylene diamine; an alkanolmine such as ethanolamine; diethanolamine; triethanolamine; etc. Polyol polyethers can be obtained with processes known to experts in the field and described, for example, in "Saunders & Frisch-Polyurethanes, Chemistry and Tecnology" Interscience, New York, 1964.

The polyols and/or polyamines and/or monols containing hydrophilic groups (2) of the present invention support groups of the anionic or cationic type, in a quantity of between 5 and 150 meq for every 100 g of isocyanic prepolymer (a), and/or blocks of the non-ionic type.

Among the anionic groups, carboxylate and sulfonate groups are preferred, supported by units having at least one reactive group towards the isocyanic groups such as diols, diamines or aminoalcohols, salified with a base, as described in published European patent application 537.578 or in German patent 3.903.538. A unit supporting an anionic hydrophilic group which is preferred according to the present invention is dimethylolpropionic acid salified with a neutralizing agent, for example an alkaline base such as sodium hydroxide; potassium hydroxide; or a tertiary amine such as triethylamine; N-methylmorpholine; etc. The preferred base is triethylamine used in such quantities as to give a ratio COOH/N or SO₃H/N of between 1 and 1.2.

Cationic groups which can be used are ammonium, sulfonium or phosphonium groups as described in published European patent application 537.578, in U.S. patent 4.408.008 and German patent 3.643.791. The units supporting these groups contain at least one reactive group towards the isocyanates. A preferred unit supporting a cationic hydrophilic group according to the present invention is N-methyldiethanolamine salified with a neutralizing agent, for example an organic acid such as acetic acid, or an inorganic acid such as phosphoric acid, or quaternized with an alkylating agent such as dimethylsulfate. Preferred salification ratio are basically the stoichiometric values.

Among the polyols and/or polyamines and/or monols containing blocks of the non-ionic type, units supporting ethylene oxide blocks can be used. It is also possible to use non-ionic hydrophilic segments introduced into the isocyanic prepolymer structure as lateral or terminal chains as described in published European patent application 404.371 and in U.S. patent 4.408.008. Total quantities of ethylene oxide of between 0.1 and 40 parts by weight per 100 parts of component (a) are particularly suitable in the present invention.

In particular, according to the present invention, it is preferable to use the combination of units supporting hydrophilic groups of the ionic type, and in particular anionic, and units supporting hydrophilic groups of the non-ionic type as synergic stabilizing effects are obtained which allow a total reduction of the hydrophilic groups and consequently an improved resistance to water.

The compound containing terminal active hydrogen atoms can also comprise chain-extending agents (3) in a quantity of between 0 and 30%, in equivalents, of the total of (1)+(2)+(3).

The function of chain-extending agents in polyurethanes is described in U.S. patents 3.233.025, 3.915.937, 4.065.410 and 4.048.105. Polyols with a molecular weight of less than 400 can be used as chain-extending agents such as: ethyleneglycol, propyleneglycol, trimethylolpropane, 1,4-butandiol, bisphenols, diethyleneglycol, dipropyleneglycol, glycerine, low molecular weight condensates of propylene oxide and/or ethylene oxide on ethylenediamine, etc., or their mixtures; or aliphatic polyamines with a molecular weight of less than 400 such as: ethylenediamine, diethylenetriamine, isophorondiamine, aminoethylethanolamine, diaminocyclohexane, hexamethylenediamine, bisesamethylenetriamine, aminoethylpiperazine, hydrazine, etc. or their mixtures. The dispersion water itself can also be a chain-extender.

The reaction between the organic polyisocyanate and the compound containing chain-end active hydrogen atoms is carried out according to the known techniques illustrated in "Saunders & Frisch - Polyurethanes, Chemistry and Tecnology" Interscience, New York, 1964 and operating with such ratios between the reagents as to give a prepolymer with an isocyanic functionality having a content of NCO groups of less than 12% by weight, preferably between 3 and 11%.

The NCO-terminated prepolymer contains at least 1.4% by weight of blocked isocyanic groups.

Suitable blocking agents of the NCO groups are those indicated in "Progress in organic coatings" 3(1975) 73-99, in U.S. patents 4.524.104 and 5.157.074 or substituted pirazoles such as 3,5-dimethylpyrazole.

Examples of blocking agents which are suitable for the preparation of the compositions of the present invention are secondary or tertiary alcohols such as isopropanol or t-butanol; oximes such as methylethylketoxime; cyclohexanone oxime; acetone oxime; lactams such as ε-caprolactam; phenols such as nonylphenol; N-alkylamides such as N-methyl acetamide; imides such as phthalimide; imidazoles such as benzylimidazole; triazoles such as benzotriazole etc. Oximes, however, are preferred and in particular methylethylketoxime.

The equivalent ratio between the blocking groups and the isocyanic groups is at least 0.12:1, preferably at least 0.4:1. Ratios of between 0.6:1 and 1.1:1 are those normally used.

During the subsequent cross-linking phase at high temperature, the blocking agent is released and the isocyanic groups are reformed becoming available for the trimerization reaction. The latter is favoured by at least one trimerization catalyst (b) selected, when the hydrophilic groups present in the prepolymer are anionic and/or non-ionic, from:
i) linear or cyclic tertiary amines such as triethylenediamine, 1,3,5-tris(3-dimethylaminopropyl)hexahydro-s-triazine, 2,4,6-tris(dimethylaminomethyl)phenol, N-methyl(dimethylaminoethyl) ethanol, benzyldimethylamine, etc;
ii) cyclic amines such as 1,8-diazabicyclo[5.4.0]undecene-7 (DBU) and those indicated in U.S. patent 4.524.104;
iii) cyclic guanidines such as 1,5,7-triazabicyclo [4.4.0]dec-5-ene (TBD);
iv) the salts of (i), (ii) and (iii) with proton donors such as triethylenediamine formiate or 2-ethylhexanoate, DBU formiate or p-toluenesulfonate or 2-ethylhexanoate or phenolate and those described in U.S. patents 4.801.663, 4.335.219, 4.499.253, 4.728.676;
v) inorganic bases such as lithium, potassium and sodium hydroxide;
vi) alkoxides such as potassium alcoholate;
vii) alkaline carboxylates such as potassium acetate and relative complexes with polyethyleneglycol as described in U.S. patent 4.379.905;
viii)complexes of alkaline halides such as potassium iodide in polyethyleneglycol;

Other trimerization catalysts suitable for the present invention are described in U.S. patent 5.157.074.

Preferred catalysts are alkaline hydroxides (v).

When the hydrophilic groups present in the prepolymer are of the cationic and/or non-ionic type trimerization catalysts must be used which are stable in an acid environment such as Lewis acids, for example iron or aluminium chloride, or organometallic catalysts, for example the halides of organic antimonium.

The activity of the catalyst can be optionally increased by the use of a co-catalyst selected from the following groups: alkylene-carbonates, aldehydes, polyepoxides, oxazolines and carbodimides. When catalysts of type (i)-(iv) are used, polyepoxides are preferred.

The catalyst is added in quantities of more than 0.05% by weight, with respect to the prepolymer (a), preferably between 0.1 and 20%, more preferably between 0.1 and 5%.

Components (a) and (b) surprisingly produce monocomponent thermoreactive water-borne systems ready for use, which are stable at room temperature also for periods of months, for example with a pot-life of at least 2 months. In the case of application in the field of binders, the compositions of the present invention enable the cross-linking process to be carried out even months after the impregnation, thus allowing the production of the thermoformable agglomerates to be run in a discontinuous way.

The compositions of the present invention can contain additives such as catalysts for the synthesis and blocking of the prepolymers, antisedimentation agents, thixotropic agents, bactericides, fungicides, wetting agents, thickening agents, antifoaming agents, adhesion promotors, flame-retardants, antioxidants, U.V. absorbers, sterically hindered amines, viscosity regulators, fillers, pigments, etc., modifiers such as non-reactive "tackifier" resins for example, modified terpenephenolic resins or latexes with different chemical bases, co-reactive as latent extenders such as ketazines, ketimines and bis-oxazolidines to be used when the isocyanic prepolymer is only partially blocked. The total quantity of these optional components can vary from 0 to 80% by weight with respect to components (a) + (b).

The compositions of the present invention can be used as binders for inert materials in the form of particles or chips, as adhesives or paints. When they are used as binders, there is an impregnation phase of the inert material, preferably by spray, a forming phase of the article which is to be obtained and a cross-linking phase under heat and compression. An advantage of the compositions of the present invention is that the last two phases for the preparation of the article can be carried out at different times and, therefore, not necessarily made in a continuous way or just after the initial impregnation phase.

Further advantages offered by the compositions of the present invention are:
- low viscosity and high impregnating power;
- long pot-life of the thermoreactive water-borne system;
- the possiblity of carrying out the cross-linking process even months after the impregnation;
- the possibility of carrying out the cross-linking process in two different steps to produce, in a first step, at low temperature, flat sheets or panels, sufficiently bound to be able to be transferred and stored, and, in a second step, to produce at high temperature self-sustaining moulds with a stable shape (thermoformability);
- high mechanical properties obtained using percentages of dry binder which are much lower than those presently used in the art;
- the absence of isocyanic monomers during the cross-linking process under heat.

When used in the field of paints or adhesives, the water compositions are applied with the traditional methods. The starting of the cross-linking process requires the supply of thermal energy which can be provided electrically, electromagnetically (induction), dielectrically or by means of infra-red rays, microwaves, vapour or thermal exchange. The unblocking temperatures of the isocyanic groups vary from room temperature to 250°C.

An advantage of the present compositions in the field of paints or adhesives basically consists in the good filming and elastomeric properties of the thermoreactive system.

A process for the preparation of the compositions of the present invention comprises:
i) reacting by polyaddition a polyisocyanate with compounds containing active hydrogen atoms and hydrophilic groups, with a ratio in equivalents between the NCO groups and the groups containing active hydrogen atoms of between 1.2:1 and 20:1;
ii) blocking the NCO groups of the isocyanic prepolymer obtained in step (i) so that the ratio in equivalents between the blocking groups and the free NCO groups is between 0.12:1 and 1.1:1;
iii) dispersing the product thus obtained in water possibly containing the salifying agent; and
iv) adding a trimerization catalyst to the dispersion/solution thus obtained.

According to the process of the present invention, the blocking reaction (ii) can also take place before the polyaddition (i) or contemporaneously. In all cases the reactions can occur in mass or in solvent, for example acetone or N-methylpyrrolidone. In addition, if the isocyanic prepolymer is only partially blocked, the present invention comprises the reaction or extension of the free NCO groups either with the dispersion water itself or with compounds containing active hydrogens, more reactive than water, added to the dispersion.

The salification reaction of the ionic groups can also take place during or after the preparation of the blocked prepolymer before dispersion in water.

The dispersion phase in water is carried out so that there is a content of solids of between 10 and 60% by weight, preferably between 20 and 50%.

Phase (iv) is not necessary when the salifying agent is in itself a trimerization catalyst.

Some illustrative examples are given to provide a better understanding of the present invention and for its embodiment but do not limit the scope of the invention itself.

### EXAMPLE 1

### PREPARATION IN A SOLVENT OF TOTALLY BLOCKED PREPOLYMER

### (BLOCKING REACTION AFTER POLYADDITION)

101.8 g of TEDIMON 80 (mixture 80/20 of 2,4 and 2,6 isomers of toluenediisocyanate TDI) of ENICHEM S.p.A. and 166.6 g of acetone are charged, in a nitrogen atmosphere, into a reactor equipped with a stirrer, heat exchange devices and reflux condensers. The nitrogen is stopped, the mixture is stirred and heated to 56°C. 15.8 g of dimethylolpropionic acid are fed and the temperature is increased to 70°C maintaining it as such for 30 minutes. 541.5 g of a triol based on propyleneoxide and ethyleneoxide having a molecular weight of 3000 (TERCAROL 3052 of NEW CARBOCHIM S.A.) are then rapidly fed and the mixture is left to react at 70°C for three and a half hours under stirring. A further amount of 69.98 g of TEDIMON 80 is added, the mixture is stirred again for 10 minutes at 70°C (content of free NCO on the dry product = 6%). 104.1 g of methylethylketoxime are then slowly added, the temperature being maintained constant at 70°C for 15 minutes after the feeding has been completed.
- % final free NCO: 0;
- % blocked NCO: 6% of the dry product;
- Viscosity at 23°C: 3,000 mPa*sec;
- Appearance: clear, limpid.

### PREPARATION OF THE DISPERSION

100 g of the solution thus obtained are slowly added under stirring to 198.8 g of water containing 1.2 g of triethylamine. After dispersion under stirring for a further 3 minutes, the acetone is evaporated operating at room temperature under nitrogen stripping and the initial weight is re-established with water.

The dispersion thus obtained has the following characteristics:
- viscosity: 7 mPa*sec at 23°C;
- pH: 7.8;
- % solids: 28%;
- dimensions of the particles: 100% less than 1.2 micrometers;
- storage stability: more than 2 months at room temperature;

### PREPARATION OF THE MONOCOMPONENT THERMOREACTIVE SYSTEM

10 g of a water solution of potassium hydroxide at 1% are added to 300 g of dispersion and the mixture is stirred vigorously for a few minutes. The pot-life of this system is more than 2 months (Table 1).

### PREPARATION AND PHYSICO-CHEMICAL CHARACTERIZATION OF FILMS AND COMPOSITES.

A layer of the thermoreactive system, which after evaporation of the water at 50°C for 24 hours and subsequent cross-linking for an hour at 150°C, has a thickness of about 200 micrometers and the characteristics indicated in Table 2, is poured into a mould treated with silicon release agent.

In a second application the impregnation of flakes of flexible polyurethane foam (density: 40 Kg/m³; flake dimension: 10 mm, max) is carried out by spraying the thermoreactive system under air pressure and maintaining a weight ratio between the solid binder and flakes of about 5/95. 70 g of the agglomerate are subsequently compressed under heat operating for 5 and 15 minutes respectively at 150°C at such a pressure as to obtain a density of the final product of about 400 Kg/m³.

A second portion of agglomerate is left in the air for two months and is then thermocompressed.

The physico-mechanical properties of the final products are summarized in Table 3.

### EXAMPLE 2

### PREPARATION IN MASS OF THE BLOCKED PREPOLYMER

### (BLOCKING REACTION BEFORE POLYADDITION)

213 g of Tedimon 80 are charged, in a nitrogen atmosphere, into a reactor equipped with a stirrer and heat exchange devices, and 125 g of methylethylketoxime are fed, under stirring, in 60 minutes reaching a temperature of 65°C. This temperature is maintained for 20 minutes.

25 g of dimethylolpropionic acid are then fed reaching 75°C. This temperature is maintained for 90 minutes. 637 g of TERCAROL 3052 are rapidly added and the mixture is left to react for three hours at 75°C under stirring.

% final free NCO after a few days at room temperature or after a night at 60°C: 0.1%.
- % blocked NCO: 5.9%;
- Viscosity: 14,500 mPa*sec at 55°C;
- Appearance: clear, limpid.

### PREPARATION OF THE DISPERSION AND MONOCOMPONENT THERMOREACTIVE SYSTEM

100 g of this prepolymer, pre-heated to 70°C, are dispersed in an aqueous solution of 0.74 g of sodium hydroxide in 199.26 g of demineralized water, the addition being carried out slowly under stirring at 600 rpm and continuing the dispersion for a further 3 minutes at 800 rpm.

The dispersion thus obtained has the following characteristics:
- viscosity: 7 mPa*sec at 23°C;
- pH: 7.7;
- % solids: 33.5%;
- dimensions of the particles: 100% less than 1.2 micrometers;
- storage stability: more than 2 months at room temperature (Table 1);

### PREPARATION AND PHYSICO-CHEMICAL CHARACTERIZATION OF FILMS AND COMPOSITES

The same procedure is carried out as in example 1 and the results are shown in Tables 2 and 4.

### EXAMPLE 3

### PREPARATION IN MASS OF THE BLOCKED PREPOLYMER

### (BLOCKING REACTION CONTEMPORANEOUS TO THE POLYADDITION)

637 g of TERCAROL 3052 and 125 g of methylethylketoxime are charged, in a nitrogen atmosphere, into a reactor equipped with a stirrer and heat exchange devices and the mixture is heated to 90°C.

25 g of dimethylolpropionic acid are charged under stirring and 120°C are reached. The temperature is reduced to 65°C and Tedimon 80 is then slowly fed without ever exceeding 75°C, charging 213 g in 35 minutes. The mixture is then left to react for 3 and a half hours at 75°C under stirring.

% final free NCO after stabilization of a few days at room temperature or after a night at 60°C: 0.1%.
- % blocked NCO: 5.9%;
- Viscosity: 15,000 mPa*sec at 55°C;
- Appearance: clear, limpid.

### PREPARATION OF THE DISPERSION AND MONOCOMPONENT THERMOREACTIVE SYSTEM

The same procedure is carried out as in example 2 above.

### PREPARATION AND PHYSICO-CHEMICAL CHARACTERIZATION OF FILMS AND COMPOSITES

The same procedure is carried out as in example 1 and the results are shown in Table 4.

### EXAMPLE 4

### PREPARATION IN MASS OF THE BLOCKED PREPOLYMER

### (BLOCKING REACTION CONTEMPORANEOUS TO THE POLYADDITION)

622 g of TERCAROL 3052 and 122 g of methylethylketoxime are charged, in a nitrogen atmosphere, into a reactor equipped with a stirrer and heat exchange devices and a temperature of 90°C is reached.

35 g of dimethylolpropionic acid are then charged under stirring and the temperature is increased to 120°C. The temperature is reduced to 65°C. At this stage 221 g of Tedimon 80 are fed in 35 minutes without ever exceeding 75°C. The mixture is then left to react for 3 and a half hours at 75°C under stirring.

% final free NCO after stabilization of a few days at room temperature or after a night at 60°C: 0.15%.
- % blocked NCO: 5.7%;
- Viscosity: 25,000 mPa*sec at 55°C;
- Appearance: clear, limpid.

### PREPARATION OF THE DISPERSION AND MONOCOMPONENT THERMOREACTIVE SYSTEM

100 g of this prepolymer, pre-heated to 70°C, are dispersed in an aqueous solution of 1.05 g of sodium hydroxide in 198.95 g of demineralized water, the addition being carried out slowly under stirring at 600 rpm and continuing the dispersion for a further 3 minutes at 800 rpm.

The dispersion thus obtained has the following characteristics:
- viscosity: 7 mPa*sec at 23°C;
- pH: 7.8;
- % solids: 33.5%;
- storage stability: more than 2 months at room temperature (Table 1);

### PREPARATION AND PHYSICO-CHEMICAL CHARACTERIZATION OF FILMS AND COMPOSITES

The same procedure is carried out as in example 1 and the results are shown in Tables 2 and 4.

### EXAMPLE 5

### PREPARATION OF THE DISPERSION AND MONOCOMPONENT THERMOREACTIVE SYSTEM

100 g of the prepolymer of example 4, pre-heated to 70°C, are dispersed in an aqueous solution of 0.95 g of sodium hydroxide in 199.05 g of demineralized water, the addition being carried out slowly under stirring at 600 rpm and continuing the dispersion for a further 3 minutes at 800 rpm.

The dispersion thus obtained has the following characteristics:
- viscosity: 10 mPa∗sec at 23°C;
- pH: 7.8;
- % solids: 33.5%;
- storage stability: more than 2 months at room temperature (Table 1);

### PREPARATION AND PHYSICO-CHEMICAL CHARACTERIZATION OF FILMS AND COMPOSITES

The same procedure is carried out as in example 1 and the results are shown in Tables 2 and 5.

### EXAMPLE 6

### PREPARATION IN MASS OF PARTIALLY BLOCKED PREPOLYMER

### (BLOCKING REACTION CONTEMPORANEOUS TO THE POLYADDITION)

604 g of TERCAROL 3052 and 118 g of methylethylketoxime are charged, in a nitrogen atmosphere, into a reactor equipped with a stirrer and heat exchange devices and a temperature of 90°C is reached.

34 g of dimethylolpropionic acid are then charged under stirring and the temperature is increased to 120°C.

The temperature is reduced to 65°C. At this stage 244 g of Tedimon 80 are fed in 35 minutes without ever exceeding 75°C. The mixture is then left to react for 3 and a half hours at 75°C under stirring.

% final free NCO after stabilization of a few days at room temperature or after a night at 60°C: 1.16%.
- % blocked NCO:
- Viscosity: 23,000 mPa*sec at 55°C;
- Appearance: clear, limpid.

### PREPARATION OF THE DISPERSION AND MONOCOMPONENT THERMOREACTIVE SYSTEM

100 g of this prepolymer, pre-heated to 70°C, are dispersed in a water solution of 1.02 g of sodium hydroxide in 198.98 g of demineralized water.

The addition is carried out slowly under stirring at 600 rpm and continuing the dispersion for a further 3 minutes at 800 rpm.

The dispersion thus obtained has the following characteristics:
- viscosity: 11 mPa∗sec at 23°C;
- pH: 7.9;
- % solids: 33.8%;
- storage stability: more than 2 months at room temperature (Table 1);

### EXAMPLE 7 (Comparative)

400 g of TEDIMON 31 (polymeric MDI with a functionality of 2.7 of Enichem S.p.A.) are charged, in a nitrogen environment, into a reactor equipped with a stirrer, heat exchange devices and a reflux condenser, and 200 g of butoxy polyalkyleneglycol with a molecular weight of 3400 based on ethylene oxide and propylene oxide in a ratio of 75/25, are slowly fed. The temperature is increased to 75°C and is maintained as such for 3 hours.
- final free NCO: 20%
- Viscosity: 330 mPa*sec at 23°C.

125 g of this prepolymer are dispersed in a water solution consisting of 178 g of water, 52.5 g of methylethylketoxime, 1.25 g of potassium hydroxide at 1%, 0.1 g of SILWET L77 (Union Carbide). The addition is carried out at room temperature over a period of two minutes under stirring at 650 rpm. After a further 3 minutes of stirring an exotherm effect is observed up to 37°C.
- % solids : 50.1%
- pH : 4.1
- viscosity:620 mPa*sec at 23°C.

For carrying out the subsequent film application under similar conditions to example 1, the dispersion is diluted with water until there is a solid content of 28%. The dispersion thus obtained has a viscosity of 20 mPa*sec at 23°C and is immediately used as such. The results of the characterization are shown in Tables 1 and 2.

After about 2 hours the dispersion begins to settle.

### EXAMPLE 8 (Comparative)

The water-borne thermoreactive systems of the previous examples are compared with a humidity curing commercial prepolymer of the conventional type used as a binder of scraps of flexible polyurethane foam, having the following characteristics:
- viscosity: 1000 mPa*sec at 23°C
- NCO : 18%
- solids : 100%
- storage stability: 3 months.

As in example 1 the flakes of flexible polyurethane foam are impregnated by pouring the prepolymer very slowly until a quantity of 9% by weight of the total has been fed. At the end of the addition a quantity of water equal to 0.5% is very slowly added to the agglomerate. The agglomerate is thermoformed after a few minutes following the same procedure as in example 1. The results are shown in Table 5.

**TABLE 1**

| STORAGE STABILITY OF THE THERMOREACTIVE AQUEOUS SYSTEMS | | |
|---|---|---|
| Example | System | Shelf-life |
| 1 | Monocomponent | > 2 months |
| 2 | Monocomponent | > 2 months |
| 3 | Monocomponent | > 2 months |
| 4 | Monocomponent | > 2 months |
| 5 | Monocomponent | > 2 months |
| 6 | Monocomponent | > 2 months |
| 7 | Monocomponent | 2 hours |

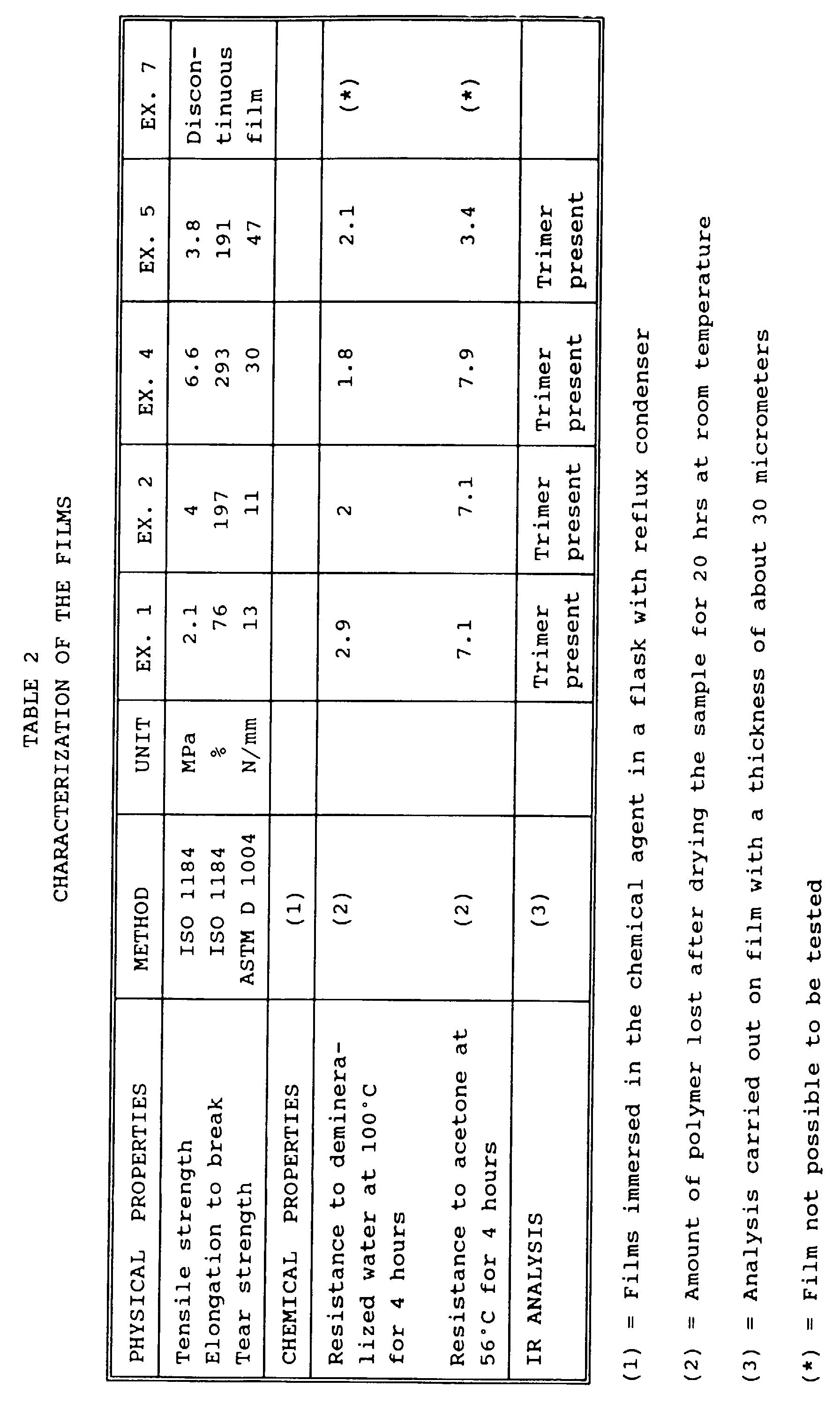

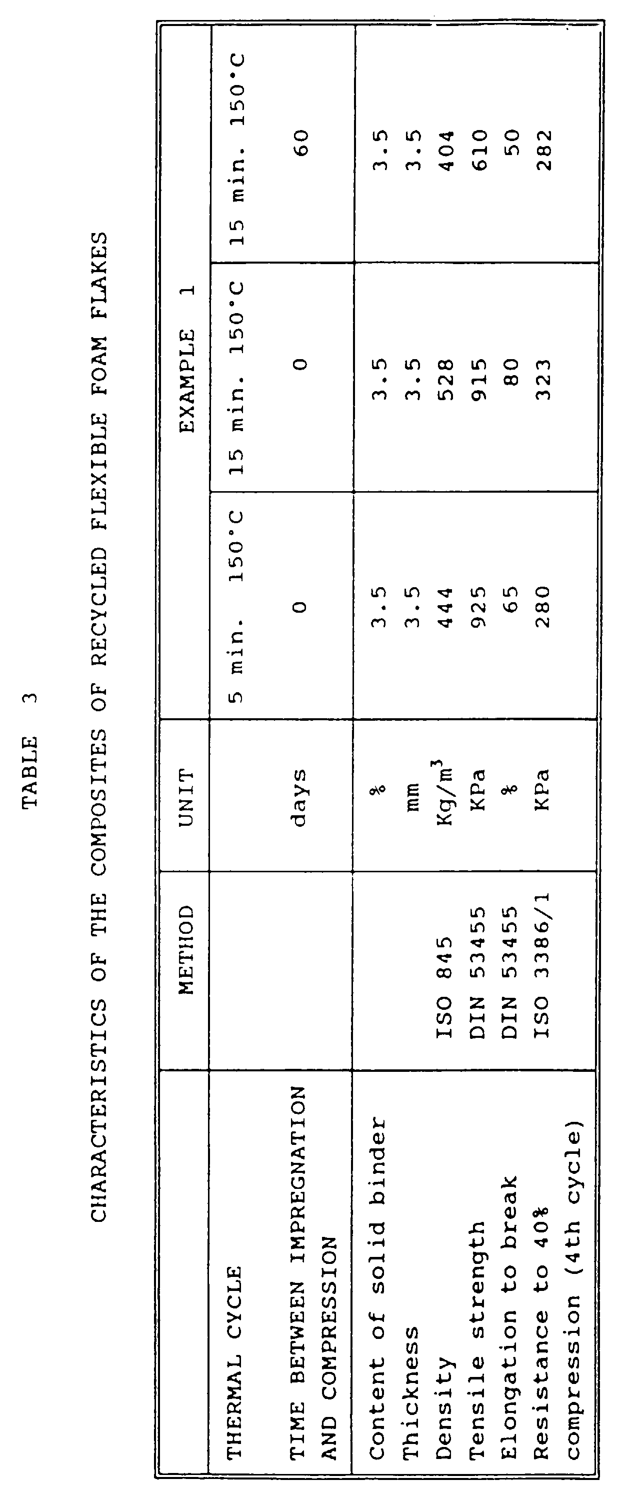

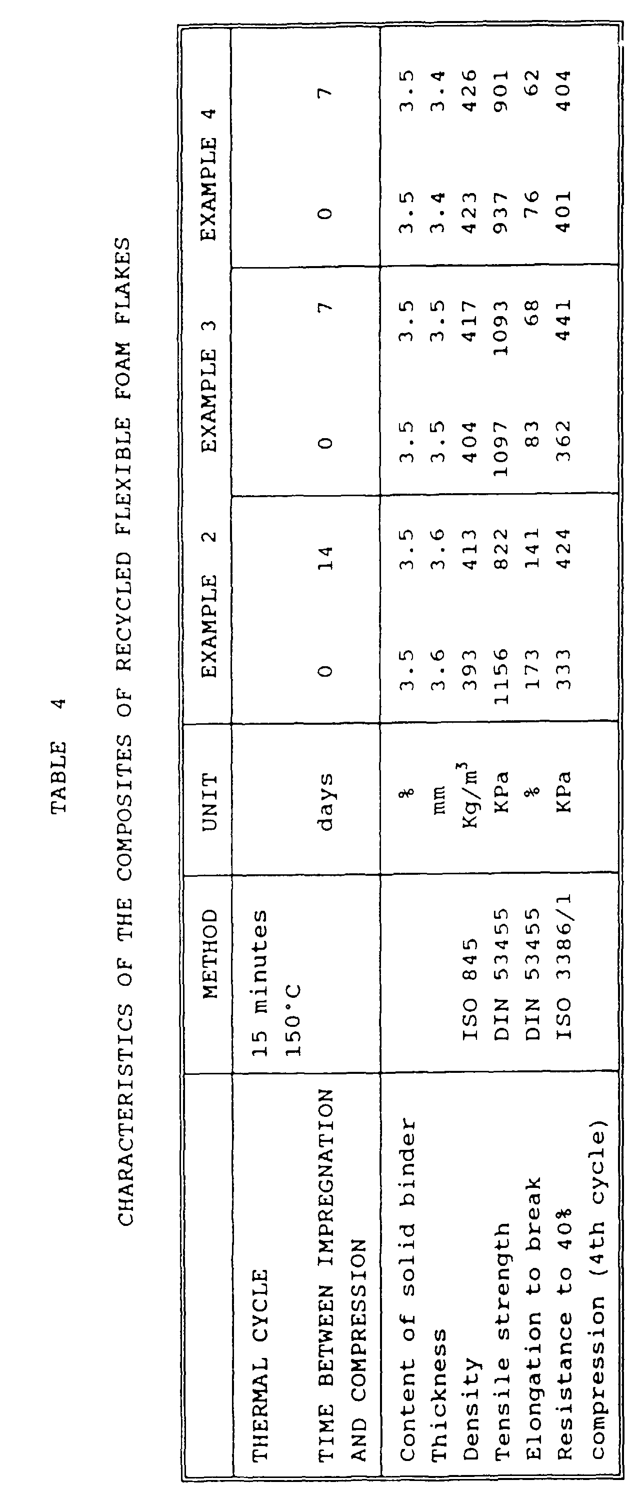

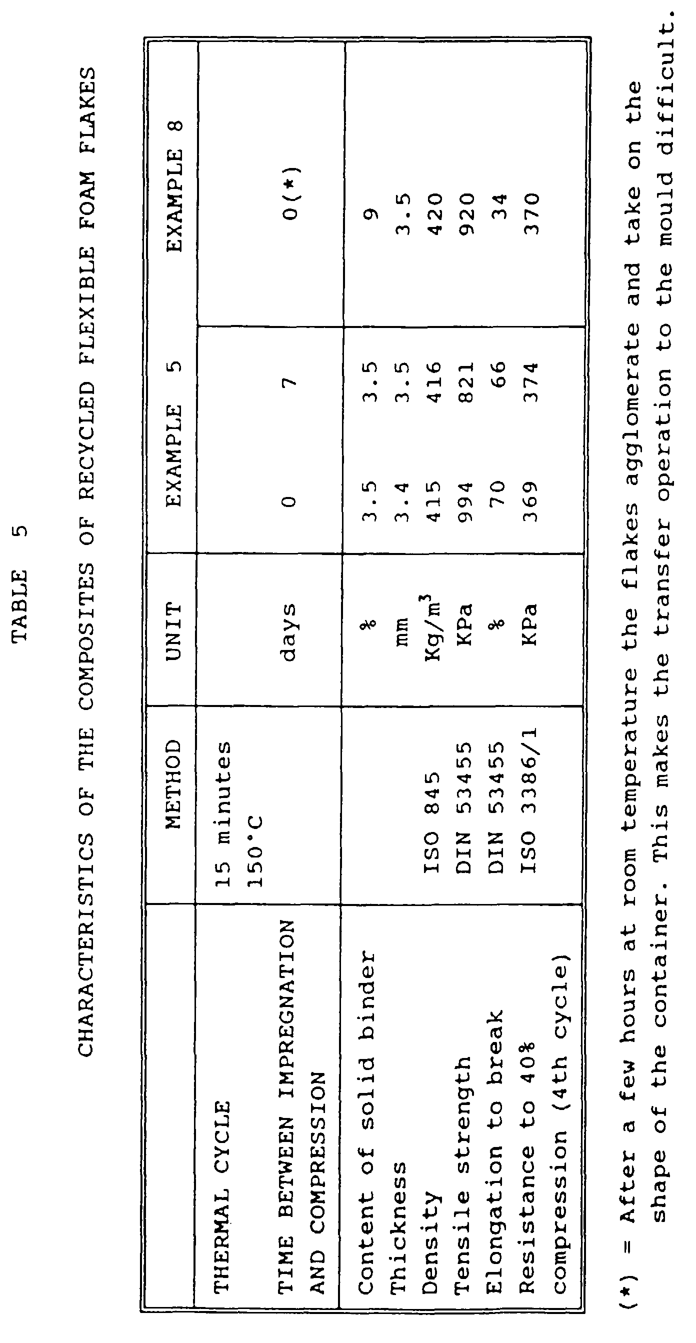

## Claims

1. Thermoreactive water-borne compositions based on stable polyurethane dispersions or solutions comprising:
a) at least one prepolymer containing hydrophilic groups, having as chain termination a totally or partially blocked isocyanic function, with a NCO groups content of less than 12% by weight and in which the NCO free groups vary from 0 to 6% by weight with respect to the weight of the prepolymer; and
b) at least one trimerization catalyst.

2. Compositions according to claim 1, wherein the at least one prepolymer (a) is obtained by the reaction of a polyisocyanate with a compound containing active terminal hydrogen atoms and with monofunctional blocking agents.

3. Compositions according to claims 1 or 2, wherein the polyisocyanates are selected from aliphatic, aromatic, arylaliphatic, cycloaliphatic polyisocyanates containing from 2 to 15 carbon atoms.

4. Compositions according to claim 3, wherein the polyisocyanate is 2,4-toluenediisocyanate alone or mixed with at least 20% by weight of 2,6 isomer.

5. Compositions according to claims 1 or 2, wherein the polyisocyanates are selected from those obtained from the phosgenation of aniline-formaldehyde condensates.

6. Compositions according to any of the previous claims, wherein the compound containing active terminal hydrogen atoms comprises polyols having a molecular weight of between 62 and 10,000 and a nominal functionality of at least 2, possibly mixed with polyamines.

7. Compositions according to any of the previous claims, wherein the compound containing active terminal hydrogen atoms comprises polyols and/or polyamines and/or monols containing hydrophilic groups of the anionic or cationic type and/or non-ionic blocks

8. Compositions according to any of the previous claims, wherein the units of the anionic or cationic type are present in quantities of between 5 and 150 meq for every 100 g of isocyanic prepolymer (a).

9. Compositions according to any of the claims from 1 to 7, wherein the units of the non-ionic type contain blocks of ethylene oxide units in quantities of between 0.1 and 40 parts by weight per 100 parts of component (a).

10. Compositions according to any of the previous claims, wherein the compound containing active terminal hydrogen atoms optionally comprises chain-extending agents in quantities of between 0 and 30%, in equivalents, of the total of the compound containing active terminal hydrogen atoms.

11. Compositions according to any of the previous claims, wherein the NCO-terminated prepolymer contains at least 1.4% by weight of blocked isocyanic groups.

12. Compositions according to any of the previous claims, wherein the blocking agents are selected from oximes.

13. Compositions according to claim 12, wherein the oxime is methylethylketoxime.

14. Compositions according to any of the previous claims, wherein the hydrophilic groups present in the prepolymer are anionic and/or non-ionic and the trimerization catalyst (b) is selected from:
i) linear or cyclic tertiary amines;
ii) cyclic amidines;
iii) cyclic guanidines;
iv) the salts of (i), (ii) and (iii) with proton donors;
v) inorganic bases;
vi) alkoxides;
vii) alkaline carboxylates;
viii)complexes of alkaline halides.

15. Compositions according to claim 14, wherein the catalyst (b) is selected from alkaline hydroxides (v).

16. Compositions according to any of the claims from 1 to 13, wherein the hydrophilic groups present in the prepolymer are of the cationic and/or non-ionic type and the trimerization catalyst (b) is selected from Lewis acids or the halides of organic antimonium.

17. Compositions according to any of the previous claims, wherein the catalyst is added in quantities of more than 0.05% by weight, with respect to the prepolymer (a).

18. Compositions according to any of the previous claims having a pot-life of at least 2 months.

19. Use of the compositions according to any of the previous claims, as binders for inert materials in the form of granules or chips, as adhesives or as paints.

20. Process for the preparation of the compositions according to any of the previous claims which comprises:
i) reacting by polyaddition a polyisocyanate with compounds containing active hydrogen atoms and hydrophilic groups, with a ratio in equivalents between the NCO groups and the groups containing active hydrogen atoms of between 1.2:1 and 20:1;
ii) blocking the NCO groups of the isocyanic prepolymer obtained in step (i) so that the ratio in equivalents between the blocking groups and the free NCO groups is between 0.12:1 and 1.1:1;
iii) dispersing the product thus obtained in water possibly containing a salifying agent; and
iv) adding a trimerization catalyst to the dispersion/solution thus obtained.

21. Process according to claim 20, wherein the blocking reaction (ii) takes place before the polyaddition (i) or contemporaneously.

22. Process according to claim 20 or 21, wherein the reactions of steps (i) and (ii) take place in mass or in a solvent.

23. Process according to claims 20, 21 or 22, wherein, when the isocyanic prepolymer is partially blocked, the free NCO groups react either with the dispersion water itself or with compounds containing active hydrogens, more reactive than water, added to the dispersion itself.

24. Process according to any of the claims from 20 to 23, wherein the dispersion phase in water is carried out so as to have a content of solids of between 10 and 60% by weight.

## Patentansprüche

1. Thermoreaktive wässrige Zusammensetzungen auf der Grundlage stabiler Polyurethandispersionen oder -lösungen, umfassend:
a) mindestens ein hydrophile Gruppen enthaltendes Prepolymer, das als Kettenabschluss eine vollständig oder teilweise blockierte Isocyanfunktion aufweist mit einem Gehalt an NCO-Gruppen von weniger als 12 Gew.-% und in dem die NCO-freien Gruppen bezogen auf das Gewicht des Prepolymeren von 0 bis 6 Gew.-% schwanken, und
b) mindestens einen Trimerisationskatalysator.

2. Zusammensetzungen nach Anspruch 1, in denen das mindestens eine Prepolymer (a) durch die Reaktion eines Polyisocyanats mit einer Verbindung, die aktive endständige Wasserstoffatome aufweist, und monofunktionellen Blockiermitteln erhalten wird.

3. Zusammensetzungen nach Anspruch 1 oder 2, in denen die Polyisocyanate aus aliphatischen, aromatischen, arylaliphatischen und cycloaliphatischen Polyisocyanaten mit 2 bis 15 Kohlenstoffatomen ausgewählt werden.

4. Zusammensetzungen nach Anspruch 3, in denen das Polyisocyanat 2,4-Toluoldiisocyanat allein oder in Mischung mit mindestens 20 Gew.-% des 2,6-Isomeren ist.

5. Zusammensetzungen nach Anspruch 1 oder 2, in denen die Polyisocyanate aus solchen ausgewählt werden, die man durch die Phosgenierung von Anilinformaldehydkondensaten erhält.

6. Zusammensetzungen nach einem der vorstehenden Ansprüche, in denen die endständige aktive Wasserstoffatome enthaltende Verbindung Polyole mit einem Molekulargewicht zwischen 62 und 10.000 und einer nominellen Funktionalität von mindestens 2, möglicherweise im Gemisch mit Polyaminen, enthält.

7. Zusammensetzungen nach einem der vorstehenden Ansprüche, in denen die endständige aktive Wasserstoffatome enthaltende Verbindung Polyole und/oder Polyamine und/oder Monole umfasst, die hydrophile Gruppen des anionischen oder kationischen Typs und/oder nichtionische Blöcke enthalten.

8. Zusammensetzungen nach einem der vorstehenden Ansprüche, in denen die Einheiten des anionischen oder kationischen Typs in Mengen zwischen 5 bis 150 mVal auf je 100 g des Isocyanprepolymeren (a) vorliegen.

9. Zusammensetzungen nach einem der Ansprüche 1 bis 7, in denen die Einheiten des nichtionischen Typs Blöcke von Ethylenoxideinheiten in Mengen zwischen 0,1 und 40 Gewichtsteilen auf 100 Teile der Komponente (a) enthalten.

10. Zusammensetzungen nach einem der vorstehenden Ansprüche, in denen die endständige aktive Wasserstoffatome enthaltende Verbindung gegebenenfalls Kettenverlängerungsmittel in Äquivalentmengen zwischen 0 und 30 % der Gesamtmenge der endständige aktive Wasserstoffatome enthaltenden Verbindungen umfasst.

11. Zusammensetzungen nach einem der vorstehenden Ansprüche, in denen das NCO-terminierte Prepolymer mindestens 1,4 Gew.-% blockierte Isocyangruppen enthält.

12. Zusammensetzungen nach einem der vorstehenden Ansprüche, in denen die Blockiermittel aus Oximen ausgewählt werden.

13. Zusammensetzungen nach Anspruch 12, in denen das Oxim Methylethylketoxim ist.

14. Zusammensetzungen nach einem der vorstehenden Ansprüche, in denen die im Prepolymer vorliegenden hydrophilen Gruppen anionisch und/oder nichtionisch sind und der Trimerisationskatalysator (b) aus
i) linearen oder cyclischen tertiären Aminen
ii) cyclischen Amidinen
iii) cyclischen Guanidinen
iv) den Salzen von (i), (ii) und (iii) mit Protonendonoren
v) anorganischen Basen
vi) Alkoxiden
vii) alkalischen Carboxylaten
viii) Komplexen von alkalischen Halogeniden
ausgewählt wird.

15. Zusammensetzungen nach Anspruch 14, in denen der Katalysator (b) aus alkalischen Hydroxiden (v) ausgewählt wird.

16. Zusammensetzungen nach einem der Ansprüche 1 bis 13, in denen die im Prepolymeren vorliegenden hydrophilen Gruppen vom kationischen und/oder nichtionischen Typ sind und der Trimerisationskatalysator (b) aus Lewis-Säuren oder den Halogeniden von organischem Antimon ausgewählt wird.

17. Zusammensetzungen nach einem der vorstehenden Ansprüche, in denen der Katalysator bezogen auf das Prepolymer (a) in Mengen von mehr als 0,05 Gew.-% zugesetzt wird.

18. Zusammensetzungen nach einem der vorstehenden Ansprüche, die einen Verarbeitungsspielraum von mindestens zwei Monaten aufweisen.

19. Verwendung der Zusammensetzungen nach einem der vorstehenden Ansprüche als Bindemittel für inerte Materialien in Form von Körnchen oder Chips, als Klebstoffe oder Anstriche.

20. Verfahren zur Herstellung der Zusammensetzungen nach einem der vorstehenden Ansprüche, das folgende Schritte umfasst:
i) Umsetzung eines Polyisocyanats durch Polyaddition mit aktive Wasserstoffatome und hydrophile Gruppen enthaltenden Verbindungen, wobei das Äquivalentverhältnis zwischen den NCO-Gruppen und den aktive Wasserstoffatome enthaltenden Gruppen 1,2 zu 1 bis 20 zu 1 beträgt;
ii) Blocken der NCO-Gruppen des in Schritt (i) erhaltenen Prepolymeren, so dass das Äquivalentverhältnis zwischen den Blockiergruppen und den freien NCO-Gruppen zwischen 0,12 zu 1 und 1,1 zu 1 liegt;
iii) Dispergieren des so erhaltenen Produkts in Wasser, das möglicherweise ein salzbildendes Mittel enthält, und
iv) Zugabe eines Trimerisationskatalyators zu der auf diese Weise erhaltenen Dispersion/Lösung.

21. Verfahren nach Anspruch 20, bei dem die Blockierreaktion (ii) vor oder gleichzeitig mit der Polyaddition (i) stattfindet.

22. Verfahren nach Anspruch 20 oder 21, bei dem die Reaktionen der Schritte (i) und (ii) in einer Masse oder in einem Lösungsmittel stattfinden.

23. Verfahren nach Anspruch 20, 21 oder 22, bei dem die freien NCO-Gruppen bei teilweiser Blockierung des Isocyanprepolymeren entweder mit dem Dispersionswasser selbst oder mit der Dispersion selbst zugesetzten Verbindungen reagieren, wobei diese Verbindungen aktive Wasserstoffatome enthalten, die stärker reaktiv als Wasser sind.

24. Verfahren nach einem der Ansprüche 20 bis 23, bei dem die Dispersionsphase in Wasser so eingestellt wird, dass sich ein Feststoffgehalt zwischen 10 und 60 Gew.-% ergibt.

## Revendications

1. Compositions thermoréactives aqueuses à base de dispersions ou de solutions de polyuréthane stables, comprenant :
a) au moins un prépolymère contenant des groupes hydrophiles, ayant comme terminaison de chaîne une fonction isocyanique totalement ou partiellement bloquée, avec une teneur en groupes NCO de moins de 12% en poids et dans lesquels les groupes exempts de NCO varient de 0 à 6% en poids par rapport au poids du prépolymère ; et
b) au moins un catalyseur de trimérisation.

2. Compositions selon la revendication 1, dans lesquelles au moins un prépolymère (a) est obtenu par réaction d'un polyisocyanate avec un composé contenant des atomes d'hydrogène actifs en position terminale avec des agents de blocage monofonctionnels.

3. Compositions selon la revendication 1 ou 2, dans lesquelles les polyisocyanates sont choisis à partir de polyisocyanate aliphatique, aromatique, arylaliphatique, cycloaliphatique, contenant de 2 à 15 atomes de carbone.

4. Compositions selon la revendication 3, dans lesquelles le polyisocyanate est le 2,4-toluènediisocyanate seul ou mélangé avec au moins 20% en poids de 2,6- isomère.

5. Compositions selon les revendications 1 à 2, dans lesquelles les polyisocyanates sont choisis à partir de ceux obtenus de la phosgénation de condensat aniline-formaldéhyde.

6. Compositions selon l'une quelconque des revendications précédentes, dans lesquelles le composé contenant les atomes d'hydrogène actifs en position terminale comprend des polyols ayant un poids moléculaire entre 62 et 10,000 et un groupe non fonctionnel nominal d'au moins 2, éventuellement mélangé avec des polyamines.

7. Compositions selon l'une quelconque des revendications précédentes, dans lesquelles le composé contenant les atomes d'hydrogène actifs en position terminale comprend des polyols et/ou des polyamines et/ou des monols contenant des groupes hydrophile du type anionique ou cationique et/ou des blocs non ioniques.

8. Compositions selon l'une quelconque des revendications précédentes, dans lesquelles les unités de type anionique ou cationique sont présentes dans des quantités entre 5 et 150 meq pour chaque fois 100 g de prépolymère isocyanique (a) .

9. Compositions selon l'une quelconque des revendications 1 à 7, dans lesquelles les unités de type non ionique contiennent des blocs d'unité oxyde éthylène dans des quantités entre 0,1 et 40 parties en poids pour 100 parties de composant (a).

10. Compositions selon l'une quelconque des revendications précédentes, dans lesquelles le composé contenant des atomes d'hydrogène actifs en position terminale comprend facultativement des agents prolongateurs de chaîne dans des quantités entre 0 et 30% dans des équivalents du total du composé contenant les atomes d'hydrogène actifs en position terminale.

11. Compositions selon l'une quelconque des revendications précédentes, dans lesquelles le prépolymère à terminaison NCO contient au moins 1,4% en poids de groupes isocyaniques bloqués.

12. Compositions selon l'une quelconque des revendications précédentes, dans lesquelles les agents bloquants sont choisis à partir d'oximes.

13. Compositions selon la revendication 12, dans lesquelles l'oxime est la méthyléthylcétoxime.

14. Compositions selon l'une quelconque des revendications précédentes, dans lesquelles les groupes hydrophiles présents dans le prépolymère sont anioniques et/ou non-ioniques et le catalyseur de trimérisation (b) est choisi à partir :
i) des amines tertiaires linéaires ou cycliques ;
ii) des amidines cycliques ;
iii) guanidines cycliques ;
iv) les sels de (i), (ii) et (iii) avec des donneurs de proton
v) des bases inorganiques ;
vi) des alkoxydes ;
vii) des carboxylates alcalins ;
viii)des complexes d'halogénures alcalins.

15. Compositions selon la revendication 14, dans lesquelles le catalyseur (b) est choisi à partir d'hydroxydes alcalins (v).

16. Compositions selon l'une quelconque des revendications de 1 à 13, dans lesquelles les groupes hydrophile présents dans le prépolymère sont de type cationique et/ou non ionique et le catalyseur de trimérisation (b) est choisi parmi les acides de Lewis et les halogénures d'antimonium organique.

17. Compositions selon l'une quelconque des revendications précédentes, dans lesquelles le catalyseur est ajouté dans des quantités de plus de 0,05% en poids, par rapport au prépolymère (a).

18. Compositions selon l'une quelconque des revendications précédentes, ayant une durée de stockage d'au moins 2 mois.

19. Utilisation des compositions selon l'une quelconque des revendications précédentes, en tant que liant pour des matériaux inertes sous forme de granules ou de copeaux, en tant qu'adhésifs ou en tant que peintures.

20. Procédé pour la préparation des compositions selon l'une quelconque des revendications précédentes qui comprend les opérations consistant à :
i) mettre en réaction par polyaddition d'un polyisocyanate avec des composés contenant des atomes d'hydrogène actifs et des groupes hydrophile, avec un rapport en équivalents entre les groupes NCO et les groupes contenant des atomes d'hydrogène actifs entre 1, 2:1 et 20:1 ;
ii) bloquer les groupes NCO du prépolymère isocyanique obtenu à l'étape (i) de façon que le rapport en équivalents entre les groupes bloquants et les groupes NCO libres se situe entre 0,12:1 et 1,1:1;
iii) mettre en dispersion le produit ainsi obtenu dans l'eau éventuellement contenant un agent salifiant ; et
iv) ajouter un catalyseur de trimérisation à la dispersion/solution ainsi obtenue.

21. Procédé selon la revendication 20, dans lequel la réaction de blocage (ii) s'effectue avant la polyaddition (i) ou simultanément.

22. Procédé selon la revendication 20 ou 21, dans lequel les réactions de étapes (i) et (ii) s'effectuent en masse ou dans un solvant.

23. Procédé selon les revendications 20, 21 ou 22, dans lequel, lorsque le polymère isocyanique est partiellement bloqué, les groupes NCO libres réagissent soit avec l'eau de dispersion elle-même soit avec des composés contenant des hydrogènes actifs, plus réactifs que l'eau, ajoutés à la dispersion elle-même.

24. Procédé selon l'une quelconque des revendications de 20 à 23, dans lequel la phase de dispersion dans l'eau est réalisée de façon à avoir une teneur en matières solides entre 10 et 60% en poids.
